Europäisches Patentamt

(19) European Patent Office

Office européen des brevets

(11) Numéro de publication : **0 323 338 B1**

(12) **FASCICULE DE BREVET EUROPEEN**

(45) Date de publication du fascicule du brevet :
08.05.91 Bulletin 91/19

(51) Int. Cl.⁵ : **F16L 23/04,** F16B 19/05,
F16B 19/10

(21) Numéro de dépôt : **88403316.8**

(22) Date de dépôt : **23.12.88**

(54) **Dispositif de jonction de deux brides espacées d'assemblage d'un tuyau d'échappement.**

(30) Priorité : 29.12.87 FR 8718320

(43) Date de publication de la demande :
05.07.89 Bulletin 89/27

(45) Mention de la délivrance du brevet :
08.05.91 Bulletin 91/19

(84) Etats contractants désignés :
**DE ES GB IT**

(56) Documents cités :
**DE-A- 2 334 385
DE-A- 3 341 266
GB-A- 424 185
US-A- 4 209 177**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Ropars, Jean-Luc
20 Rue Ecoute s'il Pleut
F-78960 Voisins le Bretonneux (FR)**

(74) Mandataire : **Durand, Yves Armand Louis et al
Cabinet Z. Weinstein 20, Avenue de Friedland
F-75008 Paris (FR)**

## Description

La présente invention se rapporte d'une manière générale à l'assemblage de brides.

Elle concerne plus particulièrement un dispositif de jonction de deux brides espacées et appartenant chacune à un élément tel que par exemple une portion de tuyau d'échappement, lequel dispositif peut être mis en place et monté automatiquement à l'aide d'un robot.

On sait que les brides permettant le raccordement de deux portions de tuyau d'échappement d'un véhicule automobile comportent généralement entre elles une garniture souple qui, après serrage des brides, doit réaliser une bonne étanchéité entre ces portions de tuyau tout en permettant à ces deux portions de rotuler correctement.

C'est pourquoi on a déjà proposé d'assembler ces brides à l'aide de boulons et de ressorts comprimés entre l'écrou des boulons et l'une des brides d'assemblage.

Cependant, l'assemblage des brides à l'aide des moyens ci-dessus, de même que le réglage de la contrainte, ne peuvent pas être effectués automatiquement à l'aide d'un robot, étant donné que l'assemblage doit être effectué dans des endroits qui sont généralement difficilement accessibles. En outre, si l'on veut utiliser un robot, il est nécessaire d'éviter les opérations de vissage, car les robots à tête visseuse sont trop encombrants pour réaliser l'assemblage en question, d'autant plus que le robot ne peut être utilisé que d'un seul côté des deux brides, l'autre côté étant généralement inaccessible.

Aussi, la présente invention vise un dispositif de jonction de deux brides qui est d'une conception totalement différente des dispositifs antérieurs de façon à permettre le montage automatique de ce dispositif à l'aide d'un robot, ce qui constitue, comme cela est maintenant de plus en plus recherché dans la fabrication et le montage des véhicules automobiles, un gain de main d'oeuvre et de prix très appréciable.

A cet effet, l'invention a pour objet un ensemble comprenant deux brides espacées et solidaires chacune d'un élément tel que par exemple une portion de tuyau d'échappement et un dispositif de jonction du type comprenant au moins un élément fileté qui traverse deux brides et qui comporte en aval des moyens de butée contre l'une des brides, ou bride aval, et en amont, des moyens de contrainte élastique contre l'autre bride, ou bride amont, caractérisé en ce que lesdits moyens de butée sont constitués par une douille cylindrique et déformable montée coulissante sur l'élément fileté au travers de la bride aval, tandis que lesdits moyens de contrainte élastique sont constitués par un écrou à perçage lisse qui est monté coulissant sur l'élément fileté pour agir sur un ressort en appui contre la bride amont et qui est radialement déformable pour le rendre solidaire de l'élément fileté.

Ce dispositif est également caractérisé par une entretoise cylindrique montée coulissante sur l'élément fileté, interposée entre la douille et l'écrou précité, et dont le diamètre extérieur est plus grand que le trou de la bride aval dans lequel passent l'élément fileté et ladite douille, et plus petit que le trou de la bride amont dans lequel passent l'élément fileté et l'entretoise.

On précisera encore ici que, selon l'invention, l'entretoise précitée comporte une extrémité logée dans un chambrage ménagé sur la face d'appui de l'écrou à perçage lisse, tandis que l'autre extrémité de l'entretoise prend appui contre une extrémité de la douille dont l'autre extrémité bute contre un épaulement prévu sur l'extrémité aval de l'élément fileté.

Suivant une autre caractéristique de l'invention, le filetage de l'élément fileté se situe au niveau de l'extrémité amont de cet élément pour coopérer avec l'écrou précité après déformation et écrasement de cet écrou qui constitue alors une butée fixe pour le ressort.

Selon encore une autre caractéristique de l'invention, en amont du filetage précité, l'élément fileté se prolonge par une tige ou analogue qui peut être saisie par les pinces d'un robot.

Le dispositif de cette invention est encore caractérisé par un étranglement formant amorce de rupture entre le filetage et la tige précitée de façon à permettre la séparation de la tige de l'élément fileté par le robot après que l'écrou a été écrasé sur le filetage par ledit robot.

L'écrou à perçage lisse et l'élément fileté sont respectivement actionnés par une pince à deux demi-bagues et une pince à mâchoires, appartenant toutes les deux au robot précité.

Ainsi, le robot pourra avantageusement réaliser de manière automatique le montage et la fixation du dispositif de l'invention sur les deux brides à assembler.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue schématique et en coupe axiale d'un dispositif selon l'invention positionné par un robot sur deux brides appartenant chacune à une canalisation telle qu'une portion de tuyau d'échappement ;

La figure 2 est une vue similaire à la figure 1, mais montrant ce dispositif en position retenue contre la bride aval ; et

La figure 3 est encore une vue similaire aux autres figures, mais montrant le dispositif en position retenue sur la bride aval et sur la bride amont, c'est-à-dire réalisant l'assemblage définitif des deux brides amont et aval.

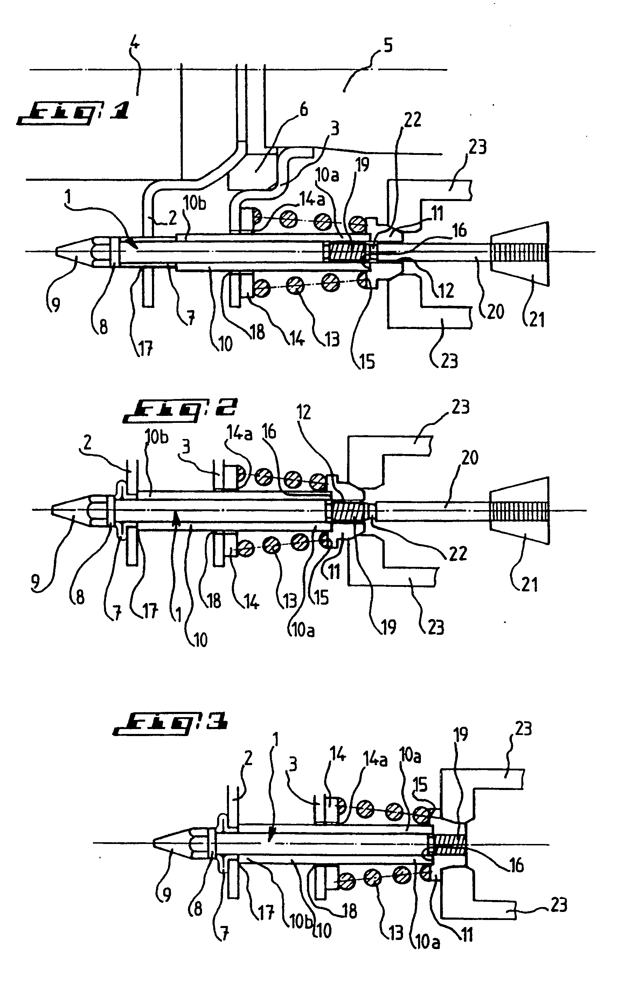

Suivant l'exemple de réalisation représenté sur ces figures, un dispositif de jonction conforme à l'invention comprend un élément fileté spécial 1 comportant un certain nombre de moyens qui seront décrits ci-après et qui réalisent l'assemblage de deux brides espacées, à savoir une bride aval 2 et une bride amont 3 appartenant respectivement à deux canalisations 4 et 5 formant par exemple des portions de tuyau d'échappement, étant entendu qu'entre les deux brides est interposée une garniture souple 6, bien visible sur la figure 1, et assurant l'étanchéité entre les deux canalisations 4 et 5 en même temps qu'elle permet à ces deux canalisations de rotuler correctement au niveau de leur jonction.

Sur l'élément fileté 1 est montée coulissante une douille 7 cylindrique et réalisée en un matériau malléable et déformable, tel que par exemple alliage d'aluminium. Cette douille 7 peut venir en butée par l'une de ses extrémités sur un épaulement 8 prévu sur l'extrémité aval 9 de l'élément fileté 1.

Ce dernier porte également une entretoise tubulaire 10 interposée entre la douille 7 et une pièce formant écrou 11 à perçage lisse 12, laquelle pièce est initialement coulissante sur l'élément fileté 1 tout comme l'entretoise 10 et la douille 7, étant entendu que tous ces éléments butent les uns contre les autres.

On a montré en 13 un ressort hélicoïdal enroulé autour de l'entretoise 10. Ce ressort prend appui d'une part sur la bride amont 3 par l'intermédiaire d'une rondelle 14, et d'autre par sur une face d'appui 15 de la pièce en forme d'écrou 11.

L'entretoise 10 possède une extrémité 10a logée dans un chambrage 16 ménagé dans la face d'appui 15 de l'écrou 11, ce qui permet d'assurer le centrage de cet écrou sur l'élément fileté 1. Un tel chambrage 16 peut être omis, sans sortir du cadre de l'invention, étant entendu que, dans ce cas là, c'est le robot qui-,comme on le décrira plus loin, permettra le centrage et l'application des divers éléments constitués par l'écrou 11, l'entretoise 10 et la douille 7, les uns contre les autres.

A cet égard, on remarquera que l'autre extrémité 10b de l'entretoise 10 prend appui sur une extrémité de la douille 7 dont l'autre extrémité prendra appui sur l'épaulement 8, la douille 7 étant susceptible de traverser un orifice 17 ménagé dans la bride aval 2.

L'entretoise 10 possède un diamètre extérieur plus grand que l'orifice 17 de la bride aval 2, de sorte que l'entretoise 10, lors de son coulissement sur l'élément fileté 1, ne peut pas franchir cet orifice. Par contre, le diamètre extérieur de l'entretoise 10 est plus petit que l'orifice 18 ménagé dans la bride amont 3, de sorte que l'entretoise 10 peut coulisser au travers de cette bride, de même qu'au travers de l'orifice 14a de la rondelle 14.

L'élément fileté 1 possède un filetage 19 s'étendant sur une longueur relativement courte, comme on le voit bien sur les figures et situé au niveau de l'extrémité amont de cet élément fileté et cela de façon à coopérer avec la pièce formant écrou 11, comme on le décrira plus loin.

En amont du filetage 19, l'élément fileté 1 se prolonge par une tige ou analogue 20 bien visible sur les figures 1 et 2 et qui peut être saisie par la pince 21 d'un robot.

Un étranglement 22, formant amorce de rupture est prévu entre le filetage 19 et la tige 20 de façon à permettre la séparation de cette tige de l'élément fileté 1 en fin de montage.

On a montré en 23 sur les figures 1 et 2 deux demi-bagues agissant sur l'écrou 11 et appartenant à une autre pince du robot susmentionné.

Mais pour une meilleure compréhension de l'invention, on expliquera ci-après le montage du dispositif ci-dessus décrit et permettant l'assemblage des deux brides 2 et 3.

Tout d'abord, le dispositif est mis en place à l'aide des pinces 21 du robot, au travers des orifices 17, 18 dans les deux brides, étant entendu que les deux demi-bagues 23 sont asservies au déplacement de la pince.

Ainsi, comme on le voit sur la figure 1, l'écrou 11 se trouve prêt à comprimer le ressort 13 appliquant la rondelle 14 contre la bride amont 3, et la douille 7 est engagée dans l'orifice ou trou 17 de la bride aval 2.

Les mâchoires 21 et les demi-bagues 23 du robot continuent à se déplacer ensemble vers la gauche jusqu'à ce que l'extrémité 10b de l'entretoise 10 entre en contact avec la bride aval 2, comme on le voit bien sur la figure 2, étant entendu que, pendant ce mouvement, le ressort 13 est comprimé.

Les demi-bagues 23 sont alors immobilisées par rapport aux brides 2 et 3, et on exerce une traction, vers la droite, sur la pince 21, ce qui provoque une déformation de la douille 7 comme on le voit encore sur la figure 2. Plus précisément, la douille qui est en un matériau malléable, forme un bourrelet contre la bride aval 2 et empêchant l'élément fileté 1 de s'extraire de l'orifice 17 dans cette bride.

Ensuite, les mâchoires 21 de la pince étant immobiles par rapport aux brides 2 et 3, on écrase radialement la pièce en forme d'écrou 11, à l'aide des deux demi-bagues 23. Il en résulte une coopération du perçage lisse 12 de la pièce 11 avec le filetage 19 de l'élément fileté 1, de sorte que ledit écrou constitue une butée fixe pour le ressort 13. C'est ce que l'on voit sur la figure 3.

Ensuite, on exerce de nouveau une traction sur l'élément fileté 1 à l'aide des mâchoires de la pince 21, ce qui permet de casser la tige 20 au niveau de l'étranglement 22, et de la séparer ainsi de la partie restante de l'élément fileté 1, ce après quoi les mâchoires 21 et les demi-bagues 23 sont relâchées. On voit bien sur la figure 3 que la tige 20 a été séparée de l'élément fileté 1.

On a donc réalisé suivant l'invention un dispositif de jonction pour bride qui permet de maintenir une compression dans des limites déterminées et qui peut être mis en place très rapidement à l'aide d'un robot et cela tout en assurant l'étanchéité et le rotulage requis dans ce genre d'assemblage.

## Revendications

1. Ensemble comprenant deux brides espacées et solidaires chacune d'un élément tel que par exemple une portion de tuyau d'échappement et un dispositif de jonction du type comprenant au moins un élément fileté (1) qui traverse les deux brides et qui comporte en aval de moyens de butée contre l'une des brides, ou bride aval (2), et en amont des moyens de contrainte élastique contre l'autre bride, ou bride amont (3), caractérisé en ce que lesdits moyens de butée sont constitués par une douille (7) cylindrique et déformable montée coulissante sur l'élément fileté (1) au travers de la bride aval (2), tandis que lesdits moyens de contrainte élastique sont constitués par un écrou (11) à perçage lisse (12) qui est monté coulissant sur l'élément fileté (1) pour agir sur un ressort (13) en appui contre la bride amont (3) et qui est radialement déformable pour le rendre solidaire de l'élément fileté (1).

2. Ensemble selon la revendication 1, caractérisé par une entretoise cylindrique (10) montée coulissante sur l'élément fileté (1), interposée entre la douille (7) et l'écrou précité (11), et dont le diamètre extérieur est plus grand que le trou (17) de la bride aval (2) dans lequel passent l'élément fileté (1) et ladite douille et plus petit que le trou (18) de la bride amont (3) dans lequel passent ledit élément fileté (1) et ladite entretoise (10).

3. Ensemble selon la revendication 1 ou 2, caractérisé en ce que l'entretoise précitée (10) comporte une extrémité (10a) logée dans un chambrage (16) ménagé sur la face d'appui (15) de l'écrou (11) à perçage lisse (12), tandis que l'autre extrémité (10b) de l'entretoise (10) prend appui contre une extrémité de la douille (7) dont l'autre extrémité bute contre un épaulement (8) prévu sur l'extrémité aval (9) de l'élément fileté (1).

4. Ensemble selon l'une des revendications 1 à 3, caractérisé en ce que le filetage (19) de l'élément fileté précité (1) se situe au niveau de l'extrémité amont de cet élément pour coopérer avec l'écrou précité (11) après déformation et écrasement de cet écrou qui constitue alors une butée fixe pour le ressort (13).

5. Ensemble selon l'une des revendications 1 à 4, caractérisé en ce qu'en amont du filetage précité (19), l'élément fileté (1) se prolonge par une tige ou analogue (20) qui peut être saisie par les pinces d'un robot.

6. Ensemble selon la revendication 4 ou 5, caractérisé par un étranglement (22) formant amorce de rupture entre le filetage (19) et la tige précitée (20) de façon à permettre la séparation de la tige de l'élément fileté par le robot après que l'écrou a été écrasé sur le filetage par ledit robot.

7. Ensemble selon l'une des revendications précédentes, caractérisé en ce que l'écrou (11) et l'élément fileté (14) sont respectivement actionnés par une pince à deux demi-bagues (23) et une pince à mâchoires (21), appartenant toutes les deux au robot précité.

## Ansprüche

1. Zwei in Abstand voneinander liegende und jeweils mit einem Element wie zum Beispiel einem Auspuffrohrteil fest verbundene Flanschen und eine Verbindungsvorrichtung aufweisende Anordnung, derjenigen Gattung, mit wenigstens einem Gewindeelement (1), das die beiden Flanschen durchsetzt und stromabwärts Mittel zum Anschlag an einem der Flanschen bzw. unterstromigen Flansch (2) und stromaufwärts Mittel zur elastischen Beaufschlagung des anderen Flansches bzw. oberstromigen Flansches (3) aufweist, dadurch gekennzeichnet, dass die besagten Anschlagmittel durch eine gleitbar an dem Gewindeelement (1) durch den unterstromigen Flansch (2) hindurch angeordnete, zylindrische und verformbare Hülse (7) gebildet wird, während die besagten elastischen Beaufschlagmittel aus einer Mutter (11) mit glatter Bohrung (12) bestehen, die gleitbar an dem Gewindeelement (1) angeordnet ist, um auf eine sich an dem oberstromigen Flansch (3) abstützende Feder (13) einzuwirken und die radial verformbar ist,um sie mit dem Gewindeelement (1) fest zu verbinden.

2. Anordnung nach Anspruch 1, gekennzeichnet durch ein auf dem Gewindeelement (1) gleitend verschiebbar angeordnetes, zwischen der Hülse (7) und der vorgenannten Mutter (11) zwischengeschaltetes, zylindrisches Zwischenglied (10), dessen Aussendurchmesser grösser ist, als das Loch (17) in dem unterstromigen Flansch (2), welches durch das Gewindeelement (1) und die besagte Hülse durchsetzt wird und kleiner ist als das Loch (18) in dem oberstromigen Flansch (3), welcher durch das besagte Gewindeelement (1) und das besagte Zwischenstück (10) durchsetzt wird.

3. Anordnung nach Anspruch 1 oder 2, dadurch gekennzeichnet, dass das vorgenannte Zwischenstück (10) ein in einer in der Abstützfläche (15) der Mutter (11) mit glatter Bohrung (12) gebildeten Senkung (16) aufgenommenes Ende (10a) aufweist, während das andere Ende (10b) des Zwischenstücks (10) sich an einem Ende der Hülse (7) abstützt, deren anderes Ende an eine an dem unterstromigen Ende (9) des Gewindeelementes (1) vorgesehene Schulter anstösst.

2

34=EP 0 323 338 B1

**Page 7**

4. Anordnung nach einem der Ansprüche 1 bis 3, dadurch gekennzeichnet, dass das Gewinde (19) des vorgenannten Gewindeelementes (1) im Bereich des oberstromigen Endes dieses Elementes liegt, um mit der vorgenannten Mutter (11) nach Verformung und Zerdrückung dieser Mutter zusammenzuwirken, welche dann einen ortsfesten Anschlag für die Feder (13) bildet.

5. Anordnung nach einem der Ansprüche 1 bis 4, dadurch gekennzeichnet, dass stromaufwärts bezüglich des vorgenannten Gewindes (19), das Gewindeelement (1) sich durch eine Spindel oder dergleichen (20) verlängert, die von den Zangen eines Roboters ergriffen werden kann.

6. Anordnung nach Anspruch 4 oder 5, gekennzeichnet durch eine eine Bruchquellenstelle zwischen dem Gewinde (19) und der vorgenannten Spindel (20) bildende Einschnürung, um die Trennung der Spindel von dem Gewindeelement durch den Roboter zu ermöglichen, nachdem die Mutter durch den besagten Roboter auf dem Gewinde zerdrückt worden ist.

7. Anordnung nach einem der vorangehenden Ansprüche, dadurch gekennzeichnet, dass die Mutter (11) und das Gewindeelement (14) jeweils durch eine Zange mit zwei Halbringen (23) und eine Zange mit Klemmbacken (21), welche beide zum vorgenannten Roboter gehören, betätigt werden.

**Claims**

1. System comprising two spaced flanges made fast each one to an element such for instance as a portion of an exhaust pique and a joining device of the type comprising at least one threaded element (1) which extends through both flanges and comprises, downstream, means for abutment against one of the flanges or downstream flange (2) and, upstream, means for providing an elastic constraint against the other flange or upstream flange (3), characterized in that the said abutment means are constituted by a cylindrical and deformable bush (7) slidably mounted onto the threaded element (1) right through the downstream flange (2) whereas the said elastic constraining means are constituted by a nut (11) with a smooth bore (12) which is slidably mounted onto the threaded element (1) to act upon a spring (13) bearing against the upstream flange (3) and which is radially deformable for making it fast to the threaded element (1).

2. System according to claim 1, characterized by a cylindrical spacer (10) slidably mounted onto the threaded element (1), interposed between the bush (7) and the aforesaid nut (11) and the outer diameter of which is greater than the hole (17) of the downstream flange (2) into which are passing the threaded element (1) and the said bush and smaller than the hole (18) of the upstream flange (3) into which are passing the said threaded element (1) and the said spacer (10).

**Page 8**

3. System according to claim 1 or 2, characterized in that the aforesaid spacer (10) comprises one end (10a) accommodated in a recessing (16) formed on the bearing face (15) of the nut (11) with a smooth bore (12) whereas the other end (10b) of the spacer (10) is bearing against one end of the bush (7) the other end of which is abutting against a shoulder (8) provided on the downstream end (9) of the threaded element (1).

4. System according to one of claims 1 to 3, characterized in that the threading (19) of the aforesaid threaded element (1) is located at the upstream end of this element to co-operate with the aforesaid nut (11) after deformation and crushing of this nut which then constitutes a fixed stop for the spring (13).

5. System according to one of claims 1 to 4, characterized in that upstream of the aforesaid threading (19) the threaded element (1) is extended by a rod or the like (20) which may gripped by the nippers of a robot.

6. System according to claim 4 or 5, characterized by a narrowed portion (22) forming an incipient breaking point between the threading (19) and the aforesaid rod (20) so as to permit the separation of the rod from the threaded element by the robot after the nut has been crushed onto the threading by tie said robot.

7. System according to one of the preceding claims, characterized in that the nut (11) and the threaded element (14) are actuated by a nipper with two halfrings (23) and a nipper with jaws (21), respectively, belonging both to the aforesaid robot.

Fig. 1

Fig. 2

Fig. 3